# EUROPEAN PATENT APPLICATION

(11) **EP 1 798 904 A1**
(43) Date of publication of application: **20.06.2007**
(21) Application number: 06025708.6
(22) Date of filing: 12.12.2006
(51) Int. Cl.: H04L 12/413, H04L 12/66, H04L 12/56

(54) **Network gateway and communication frame relaying method**

(30) Priority: 14.12.2005 JP 2005360647
(71) Applicant: DENSO CORPORATION, Kariya-city, Aichi-pref. 448-8661 (JP)
(72) Inventor: Tani, Mitushiro, Kariya-city, Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

In a network gateway, when a target communication frame is transferred bit-by-bit from at least one of nodes through a corresponding one of networks, a receiving unit sequentially receives the transferred target communication frame bit-by-bit, and sequentially outputs the received target communication frame bit-by-bit. A buffer sequentially stores therein the bits of the target communication frame sequentially output from the receiving unit. A destination determining unit works, concurrently with the buffer, to receive, bit-by-bit, the target communication frame output from the receiving unit and to, when receiving an identifier of the target communication frame, determine a destination network of the target communication frame based on the received identifier. A transferring unit is operatively connected to the buffer and transfers, bit-by-bit, the target communication frame stored in the buffer to the destination network determined by the destination determining unit.

## Description

### BACKGROUND OF THE INVENTION

### Cross Reference to Related Application

This application is based on Japanese Patent Application 2005-360647 filed on December 14, 2005. This application aims at the benefit of priority from the Japanese Patent Application, so that the descriptions of which are all incorporated herein by reference.

### Field of the Invention

The present invention relates to network gateways and methods for relaying communication frames among a plurality of networks. More particularly, the present invention relates to network gateways and communication-frame relaying methods, which are designed to reduce the level of delay in the relays.

### Description of the Related Art

In conventional vehicles, a plurality of electronic control units (ECUs) are communicably linked to each other through an in-vehicle network to constitute an in-vehicle communication system. With increase in complexity of vehicle control, conventional in-vehicle communication systems are complicated in hardware and/or software. Specifically, an in-vehicle communication system is equipped with a plurality of different networks, and an in-vehicle network gateway communicable to the different networks. The in-vehicle network gateway allows frames to be transferred among the different networks to be relayed thereamong.

An example of the configuration and communication-frame transferring operations of a conventional in-vehicle network gateway communicably linked to different in-vehicle networks will be described hereinafter.

In-vehicle communication systems normally use, as a communication protocol, the Controller Area Network (CAN) protocol internationally standardized in the ISO. A CAN frame used in the CAN protocol has at its first information field in which an identifier is arranged. The identifier allows a destination network of the corresponding frame to be identified. It is to be noted that the identifier in a CAN frame is used to identify the type of a message to be arranged in a data field of the CAN frame. Because which ECUs should receive which types of messages is previously defined in an in-vehicle communication system IS, it is possible to identify the destination network of a CAN frame based on the identifier therein.

Specifically, in the conventional in-vehicle network gateway communicably linked to the different in-vehicle networks, when a CAN frame is transferred from an ECU communicably linked to one of the different networks, a receiving circuit of the in-vehicle gateway starts to receive the CAN frame. When the receiving circuit completely receives the CAN frame, the receiving circuit generates an interrupt request to a microcomputer of the in-vehicle network gateway.

The microcomputer of the in-vehicle network gateway is programmed to:
service the interrupt request to read the whole of the CAN frame received by the receiving circuit therefrom;
identify, based on the identifier of the CAN frame, a destination network to which the received CAN frame should be transferred; and
send the received CAN frame bit-by-bit to a transmitting circuit of the gateway configured to send data to the identified destination network.

The transmitting circuit transmits the CAN frame sent from the microcomputer to the destination network.

The procedure set forth above allows CAN-frame relay between the different networks.

On the other hand, another example of a packet relay device for relaying packets among different networks is disclosed in Japanese Unexamined Patent Publication No. 2003-304293. The packet relay device disclosed in the Patent Publication is designed based on a TCP/IP (Transmission Control Protocol/Internet Protocol) that is standardized to be used by any device connecting the Internet.

As described above, a conventional in-vehicle network gateway is configured to start to identify a destination network of a CAN frame after completion of receiving of the whole of the CAN frame, and to send the received CAN frame to the identified destination network after completion of the identifying operation.

For this reason, despite depending on data transmission rate of a sender ECU, it may take a lot of time until the start of transmitting a CAN frame from the start of receiving the CAN frame sent from the sender ECU, such as several tens to hundred and several tens of microseconds (µs). This may cause increase in time required to relay a CAN frame between different networks, and therefore, data transfer among ECUs may be delayed; these ECUs are respectively linked through the in-vehicle network gateway to different networks.

On the other hand, because the packet relay device disclosed in the Patent Publication is designed on the basis of the TCP/IP, assuming that the packet delay device is installed in such an in-vehicle control system set forth above, wasted operations may arise in data transfer among ECUs respectively linked through the packet relay device to different networks.

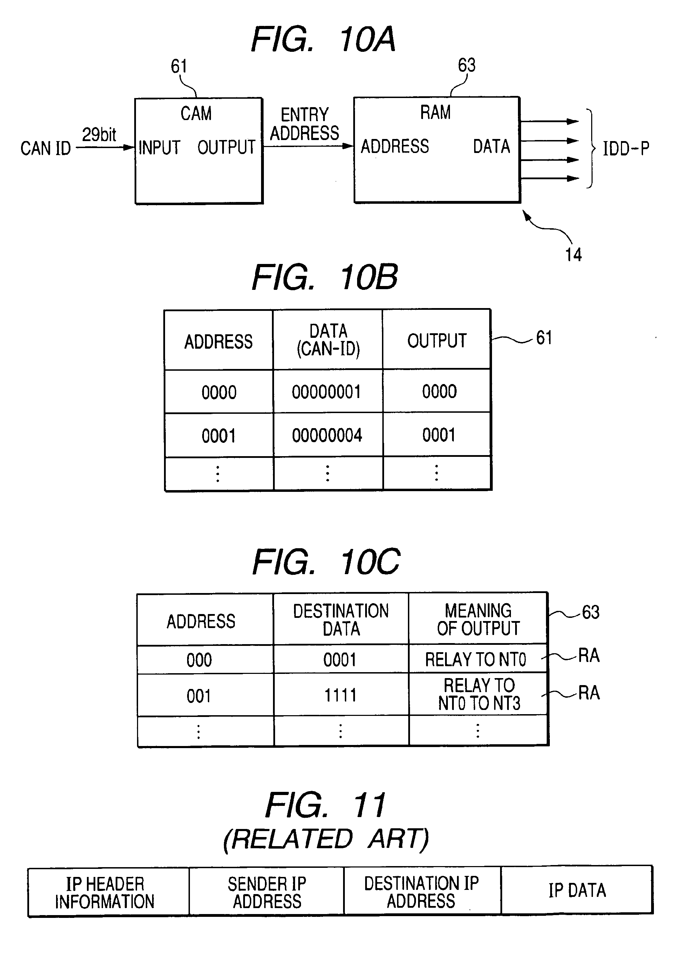

For example, data transfer based on the IP is carried out in IP datagram (IP packet). As illustrated in Fig. 11, an IP datagram consists of: IP header information located at the head field thereof; a sender IP address located at the following field; a destination IP address located at the following field; and IP data located at the following field.

The IP data information contains therein various items of communication control information, such as the version of the corresponding IP, the number of bytes of the IP addresses following thereafter, and the data length.

For this reason, when relaying an IP datagram between one network and another one network, the packet relay device needs the following operations:
(a) analyze the IP header information at first;
(b) extract the destination IP address in the IP datagram based on the analyzed result; and
(c) analyze the extracted destination IP address to identify a destination network corresponding to the destination IP address after completion of extracting of the destination IP address.

In contrast, as described above, the CAN protocol allows only analysis of the identifier located at the head of a CAN frame to identify the destination network of the CAN frame without the need to analyze IP header information of an IP datagram to extract the destination IP address thereof.

### SUMMARY OF THE INVENTION

In view of the background, an object of at least one aspect of the present invention is to provide network gateways and methods capable of relaying communication frames between different networks while keeping low the level of delay in the relays.

According to one aspect of the present invention, there is provided a network gateway through which a plurality of networks each including a node are communicable to each other. At least one node and another one node allow transfer of a target communication frame therebetween through the network gateway. The target communication frame is composed of a train of bits and defined by a predetermined communication protocol. The target communication frame contains an identifier and message data. The identifier is composed of part of the train of bits. The message data is composed of another part of the train of bits. The identifier is located before the message data based on the communication protocol, the identifier allowing a destination of the target communication frame to be identified. The network gateway includes a receiving unit configured to, when the target communication frame is transferred bit-by-bit from at least one of the nodes through a corresponding one of the networks, sequentially receive the transferred target communication frame bit-by-bit, and to sequentially output the received target communication frame bit-by-bit. The network gateway includes a buffer configured to sequentially store therein the bits of the target communication frame sequentially output from the receiving unit. The network gateway includes a destination determining unit working, concurrently with the buffer, to receive, bit-by-bit, the target communication frame output from the receiving unit and to, when receiving the identifier of the target communication frame, determine a destination network of the target communication frame based on the received identifier. The network gateway includes a transferring unit operatively connected to the buffer and configured to transfer, bit-by-bit, the target communication frame stored in the buffer to the destination network determined by the destination determining unit.

According to another aspect of the present invention, there is provided a method of relaying a communication frame through a plurality of networks each including a node. The communication frame is composed of a train of bits and defined by a predetermined communication protocol. The communication frame contains an identifier and message data. The identifier is composed of part of the train of bits. The message data is composed of another part of the bit train. The identifier is located before the message data based on the communication protocol. The identifier allows a destination of the target communication frame to be identified. The method includes, when the target communication frame is transferred bit-by-bit from at least one of the nodes through a corresponding one of the networks, sequentially receiving the transferred communication frame bit-by-bit. The method includes sequentially outputting the target communication frame bit-by-bit, and sequentially storing, in a storage, the bits of the communication frame sequentially outputted from the receiving unit. The method includes receiving, concurrently with the storing of the bits of the communication frame in the storage, the target communication frame bit-by-bit outputted from the receiving. The method includes, when the receiving receives the identifier of the target communication frame, determining a destination network of the communication frame based on the received identifier. The method includes transferring, bit-by-bit, the target communication frame stored in the storage to the destination network determined by the determining.

### BRIEF DESCRIPTION OF THE DRAWINGS

Other objects and aspects of the invention will become apparent from the following description of embodiments with reference to the accompanying drawings in which:
Fig. 1 is a block diagram schematically illustrating an example of the structure of an in-vehicle communication system to which an in-vehicle network gateway according to a first embodiment of the present invention is applied is installed;
Fig. 2 is a block diagram schematically illustrating an example of the structure of the in-vehicle network gateway illustrated in Fig. 1, and illustrating data flows and control-signal flows among components of the in-vehicle network gateway;
Fig. 3 is a time chart schematically illustrating time-variable waveforms of the control signals transferred among components of the in-vehicle network gateway illustrated in Fig. 2;
Fig. 4 is a block diagram schematically illustrating an example of the structure of a relay-function sequencer illustrated in Fig. 2;
Fig. 5A is a block diagram schematically illustrating an example of the structure of a destination determining unit illustrated in Fig. 2;
Fig. 5B is a view schematically illustrating an example of the memory structure of a RAM illustrated in Fig. 5A;
Fig. 6 is a block diagram schematically illustrating an example of the structure of an in-vehicle network gateway, and illustrating data flows and control-signal flows among components of the in-vehicle network gateway according to a second embodiment of the present invention;
Fig. 7 is a time chart schematically illustrating time-variable waveforms of the control signals transferred among components of the in-vehicle network gateway illustrated in Fig. 6;
Fig. 8 is a block diagram schematically illustrating an example of the structure of an in-vehicle network gateway, and illustrating data flows and control-signal flows among components of the in-vehicle network gateway according to a third embodiment of the present invention;
Fig. 9 is a time chart schematically illustrating time-variable waveforms of the control signals transferred among components of the in-vehicle network gateway illustrated in Fig. 8;
Fig. 10A is a block diagram schematically illustrating an example of the structure of a destination determining unit according to a modification of each of the first to third embodiments of the present invention;
Fig. 10B is a view schematically illustrating an example of the memory structure of a CAM illustrated in Fig. 10A;
Fig. 10C is a view schematically illustrating an example of the memory structure of a RAM illustrated in Fig. 10A; and
Fig. 11 is a view schematically illustrating an example of the structure of an IP datagram in IP (Internet Protocol) format.

### DETAILED DESCRIPTION OF EMBODIMENTS OF THE INVENTION

Embodiments of the present invention will be described hereinafter with reference to the accompanying drawings.

### First embodiment

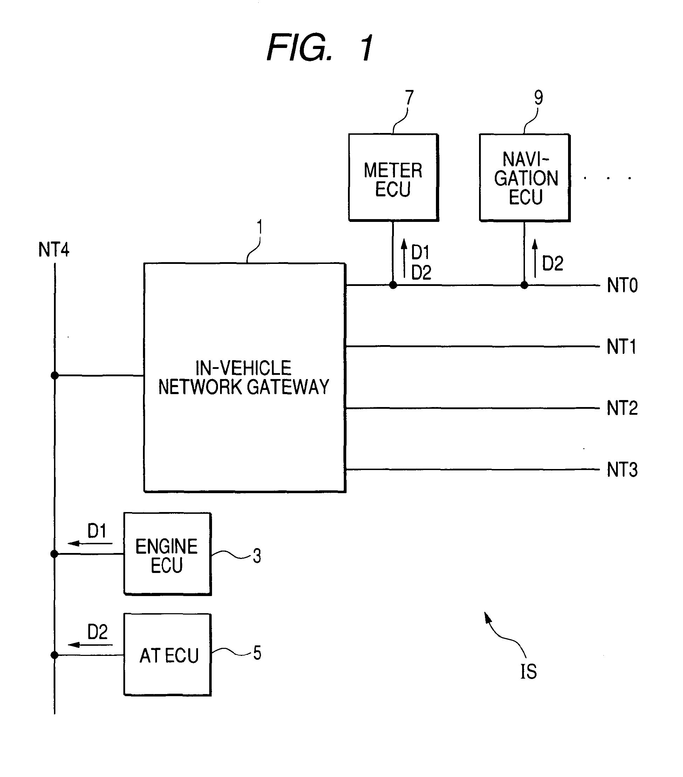

Referring to Fig. 1, an in-vehicle communication system IS to which a network gateway 1 according to a first embodiment of the present invention is applied is installed in a vehicle.

The in-vehicle communication system IS includes a plurality of in-vehicle networks NT0 to NT4 (with five pieces in this embodiment) installed inside the vehicle. Electronic control units (which will be referred to as ECUs) are communicably linked respectively to the networks NT0 to NT4 as nodes.

For instance, an ECU (engine ECU) 3 for controlling an engine of the vehicle and an ECU (AT-ECU) 5 for controlling an automatic power transmission of the vehicle are communicably linked to the network NT4. An ECU (meter ECU) 7 for controlling meters installed in, for example, an instrument panel of the vehicle and an ECU (NAVIGATION ECU) 9 for controlling a navigation system installed in the vehicle are communicably linked to the network NT0.

Data D1 indicative of an engine speed as an example of measurands measured by a sensor (not shown) is detected by the engine ECU 3. The engine speed data D1 is transferred from the engine ECU 3 to the network NT4. The engine speed data D1 is transferred through the network NT4 to the in-vehicle network gateway 1 to be relayed thereby to the network NT0. The engine speed data D1 relayed to the network NT0 is transferred therethrough to the meter ECU 7.

In addition, data D2 indicative of a vehicle speed as another example of measurands measured by a sensor (not shown) is detected by the AT ECU 5. The vehicle speed data D2 s transferred from the AT ECU 5 to the network NT4. The vehicle speed data D2 is transferred through the network NT4 to the in-vehicle network gateway 1 to be relayed thereby to the network NT0. The vehicle speed data D2 relayed to the network NT0 is transferred therethrough to the meter ECU 7 and the navigation ECU 9.

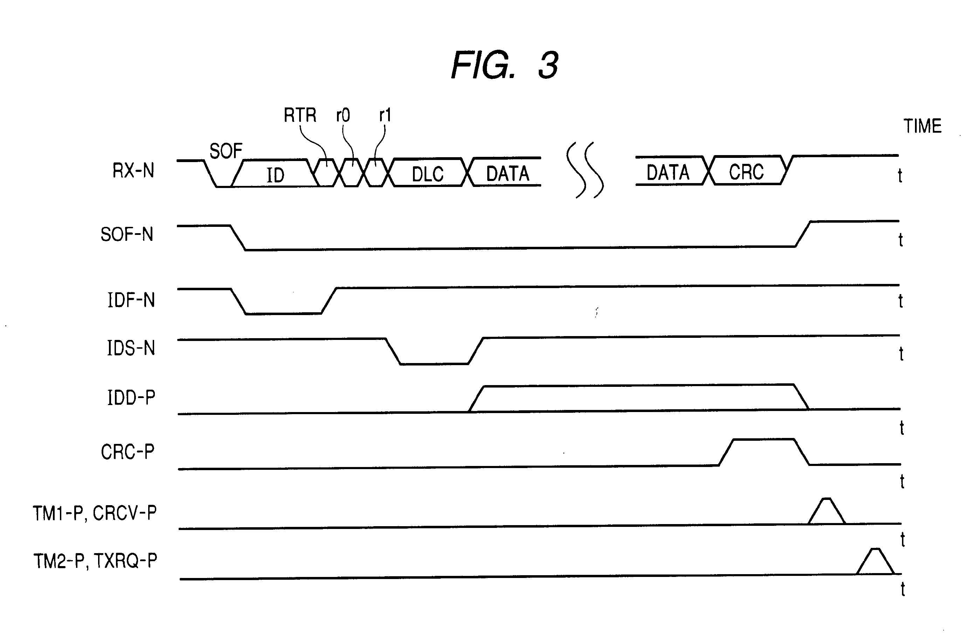

The in-vehicle communication system IS of the first embodiment adopts CAN protocol as a communication protocol used to transfer data through the networks NT0 to NT4. A communication frame (a unit of data transmitted to or received from the respective nodes) in the CAN protocol has a structure substantially illustrated by a waveform "RX-N" in Fig. 3.

Specifically, the communication frame (CAN frame) begins with an SOF (Start of Frame) with one bit. In the CAN frame, the next field (identifier field) subsequent to the SOF field is located. The identifier (ID) field serves as a first information field of the CAN frame, and consists of an identifier (ID) with plural bits for identifying a type and/or a description of a corresponding message to be transferred by the CAN frame. Next to the ID field, an RTR (Remote Transmission Request Bit) with one bit and reservation bits r0 and r1 with two bits are located.

A DLC (data length code) field consisting of a DLC with plural bits representing a data length in the number of bytes is located subsequent to the reservation bit r1.

In addition, next to the DLC field, a data field consisting of variable data (DATA) with a maximal 8 bytes corresponding to the message to be transferred is located. Next to the data filed, a CRC (Cyclic Redundancy Check) field consisting of a CRC sequence with plural bits (checking code) for checking transfer error is located.

It is to be noted that the RTR consists of a bit indicating that the corresponding data frame is which one of a data frame for transmitting data from a sender node and a remote frame for requesting data to be transmitted to another node. When the RTR represents that the corresponding frame is the remote frame, there is the data field in the frame (remote frame).

In the first embodiment, the ID consists of 11 bits (standard format), the DLC consists of 4 bits, and the CRC consists of 15 bits. The SOF has a dominant level dominated on the networks in the CAN protocol, and takes a logical low level as the dominant level in the first embodiment. In contrast, in the CAN protocol, as the other logical state level, a recessive level corresponding a logical high level can be used.

The CRC sequence of bits represents a result of performing a particular calculation on a bit train from the SOF to the data (DATA). The CRC normally represents a remnant obtained when dividing the bit train with a predetermined CRC generating polynomial as the particular calculation. The CRC sequence is obtained by the sender node.

The in-vehicle network gateway 1, referred to simply as gateway 1, according to the first embodiment is operative to relay the CAN frames, which are transmitted from at least one of the ECUs through at least one of the networks, to another at least one of the networks depending on needs.

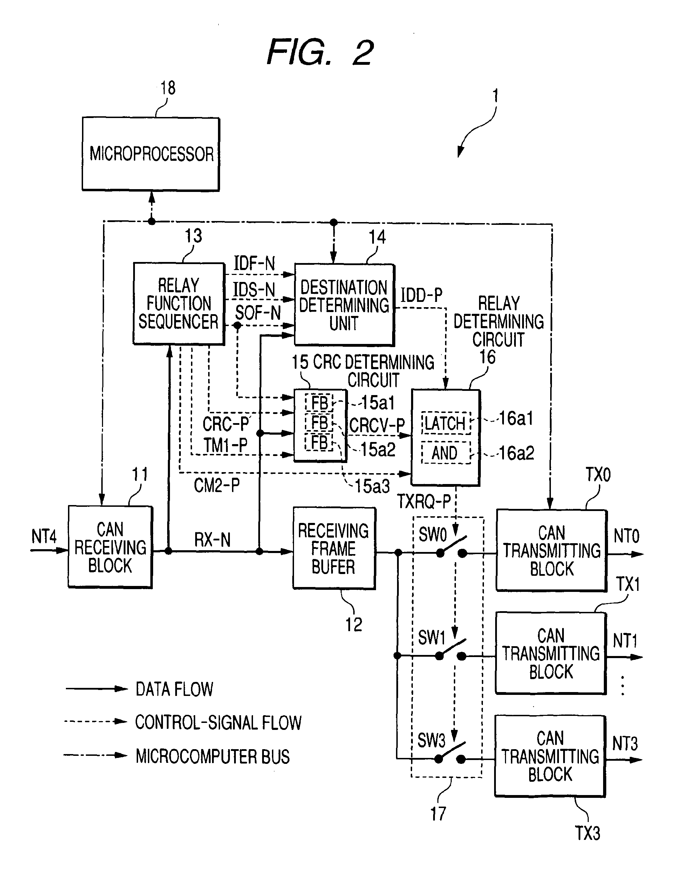

Next, an example of the configuration of the gateway 1 according to the first embodiment will be described with reference to Fig. 2. In order to facilitate understanding of the gateway's operations, operations of the gateway 1 when a CAN frame is transferred from the network NT4 to at least one of the network NT0 to NT3 will be described.

As shown in Fig. 2, the gateway 1 includes a CAN receiving block 11 connected to the network NT4 serving as a sender network, and CAN transmitting blocks TX0 to TX3 (with TX2 omitted in illustration in Fig. 2) connected to the other networks NT0 to NT3, respectively.

The gateway 1 also includes a receiving frame buffer 12, a relay-function sequencer 13, a destination determining unit 14, a CRC determining circuit 15, a relay determining circuit 16, a destination switching circuit 17, and a microprocessor 18 for setting communication conditions through the gateway 1.

The CAN receiving block 11 is operative to receive a CAN frame transmitted, as a relay-target frame, to the network NT4 from an ECU to which the network NT4 is connected, and to sequentially transmit the CAN frame bit-by-bit.

It is to be noted that the CAN receiving block 11 is operative not to store the received bits of the relay-target CAN frame, but to output the relay-target CAN frame bit-by-bit in sequence as soon as receiving it.

It is also to be noted that, in the CAN protocol, a sender node (sender ECU) is configured to execute "bit stuffing". Specifically, as the "bit stuffing", the sender node is configured to add one or more bits of one logical level into a bit train to be sent as a CAN frame when at least five continuous bits of the other logical level are contained in the bit train (CAN frame). The one or more bits to be added to the bit train will be referred to as "one or more stuffed bits".

When outputting the relay-target CAN frame every bit, the CAN receiving block 11 is configured to identify the one or more stuffed bits when it is determined that the one or more stuffed bits are added to the relay-target CAN frame, and to eliminate the one or more stuffed bits from the CAN receiving frame. As a result, the relay-target CAN frame (see "RX-N" in Fig. 3) output from the CAN receiving block 11 contains no one or more stuffed bits.

Each of the CAN transmitting blocks TX0 to TX3 is connected to the destination switching circuit 17 and is operative to transmit a bit train in a form of the CAN frame to one of the networks to which each of the blocks is connected; this bit train is input via the destination switching circuit 17.

The receiving frame buffer 12 is connected to the CAN receiving block 11 and to the destination switching circuit 17, and is operative to sequentially store the received bits of the relay-target CAN frame RX-N output from the CAN receiving block 11. It is to be noted that the receiving frame buffer 12 is capable of buffering the bit train consisting of from the SOF to the data (DATA) of a CAN frame.

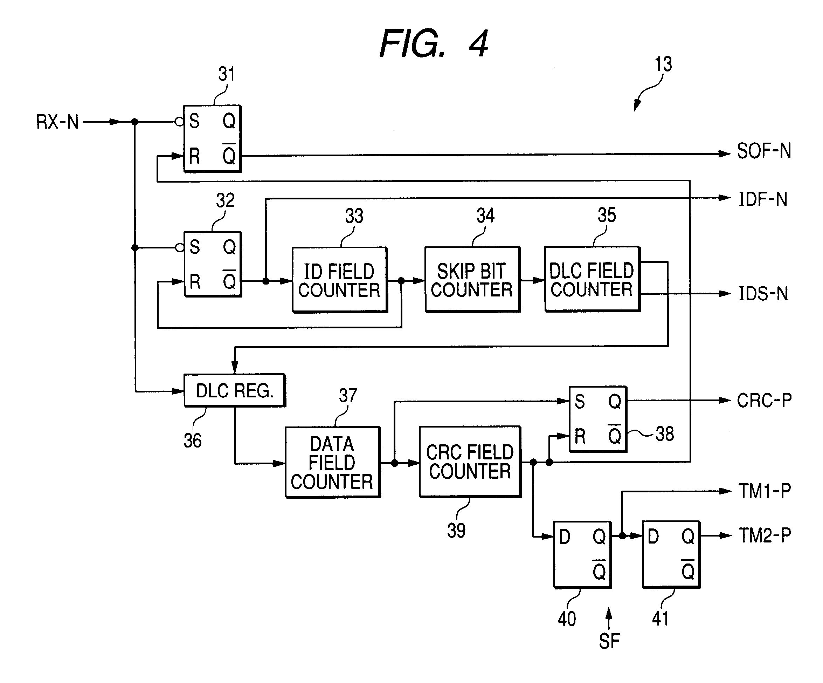

The relay-function sequencer 13 is connected to the CAN receiving block 11, the destination determining unit 14, the CRC determining circuit 15, and the relay determining circuit 16. The relay-function sequencer 13 has a structure illustrated in Fig. 4, and is operative to generate various timing signals illustrated respectively by waveforms "SOF-N", "IDF-N", "IDS-N", "IDD-P", "CRC-P", "TM1-P", "CRCV-P", "TM2-P", and "TXRQ-P".

The relay-function sequencer 13 is designed by hardwired logic circuit blocks, but can be designed by programmed logic circuit blocks operatively connected to each other.

Specifically, the relay-function sequencer 13 includes first and second latches 31 and 32 connected to the CAN receiving block 11, an ID field counter 33 connected to the second latch 32, a skip bit counter 34 connected to the ID field counter 33, and a DLC field counter 35 connected to the ID field counter 33.

The relay-function sequencer 13 also includes a DLC register 36 connected to the CAN receiving block 31 and the DLC field counter 35, a data field counter 37 connected to the DLC register 36, and a third latch 38 connected to the data field counter 37.

The relay-function sequencer 13 further includes a CRC field counter 39 connected to the data field counter 37 and the third latch 38, a first flip-flop 40 connected to the CRC field counter 39, and a second flip-flop 41 connected to the first flip-flop 40.

In the relay-function sequencer 13, when a falling edge indicative of the SOF occurs in the relay-target CAN frame RX-N output from the CAN receiving block 11, each of the first and second latches 31 and 32 turns its S input high. This allows an SOF detecting signal SOF-N corresponding to the *Q̅* output of the first latch 31 low, and an ID-receiving indicating signal IDF-N corresponding to the *Q̅* output of the second latch 32 low.

The turning-low of the ID-receiving indicating signal IDF-N of the second latch 32 allows the ID field counter 33 to count up from its initial value of zero in response to every communication clock consisting of a repetitive series of pulses (clock pulses) generated in the gateway 1.

When the count value of the ID field counter 33 reaches the number of bits, such as eleven, equivalent to that of bits of the ID of the relay-target CAN frame RX-N, the ID filed counter 33 turns the R input of the second latch 32 high. This allows the Q output thereof to be low (reset), and the ID-receiving indicating signal IDF-N corresponding to the *Q̅* output of the second latch 32 to be low.

The operation of the second latch 32 permits the ID-receiving indicating signal IDF-N output therefrom to be kept low during receipt of the ID field in the relay-target CAN frame RX-N (see the waveform "IDF-N" in Fig. 3).

It is to be noted that the pulse repetition cycle of the communication clock is set to a time required for the relay-function sequencer 13 to receive one bit of the relay-target CAN frame RX-N.

When the count value of the ID field counter 33 reaches "11", the skip bit counter 34 starts to count up from its initial value of zero in response to every communication clock.

When the count value of the skip bit counter 34 reaches the number of bits, such as three, equivalent to the total number of bits of the RTR and the reservation bits r0 and r1, the DLC field counter 35 starts to count up from its initial value of zero in response to every communication clock. The start of the counting of the DLC field counter 35 allows a DLC-receiving indicating signal IDS-N output therefrom to turn low.

When the count value of the DLC field counter 35 reaches the number of bits, such as four, equivalent to the number of bits of the DLC of the relay-target CAN frame RX-N, the DLC-receiving indicating signal IDS-N output from the DLC field counter 35 is returned high.

The operation of the DLC field counter 35 permits the DLC-receiving indicating signal IDS-N output therefrom to be kept low during receipt of the DLC field in the relay-target CAN frame RX-N (see the waveform "IDS-N" in Fig. 3).

For the period which the count value of the DLC field counter 35 has reached 4 since its initial value of 0, in other words, during the DLC-receiving indicating signal IDS-N being kept low, the relay-target CAN frame RX-N is stored bit-by-bit in the DLC register 36. This allows the DLC of the relay-target CAN frame RX-N to be stored in the DLC register 36.

When the count value of the DLC field counter 35 reaches 4 so that all four bits of the relay-target CAN frame RX-N are completely stored in the DLC register 36, a value equivalent to eight times of the stored value in the DLC register, such as "4", is preset to a count value of the data field counter 37. The value preset to the data field counter 37 represents the number of bits of data of the data filed of the relay-target CAN frame RX-N.

Then, the data field counter 37 counts down every communication clock. When the count value of the data field counter 37 reaches "0", the S input of the third latch 38 is turned high. This allows the output Q of the third latch 38 corresponding to a CRC-receiving indicating signal CRC-P to turn high (see the waveform "CRC-P" in Fig. 3).

In addition, when the count value of the data field counter 37 reaches "0", the CRC field counter 39 starts to count up from its initial value of "0" every communication clock.

When the count value of the CRC field counter 39 reaches a value equivalent to the number of bits of the CRC sequence, such as "15", the CRC field counter 39 outputs a reset signal with the high level to: the first latch 31 as its R input, the third latch 38 as its R input, and the first flip-flop 40 as its D input.

This results in that the R input of each of the first and third latches 31 and 38 is turned high. This allows the Q output of each of the first and third latches 31 and 38 to turn low (reset). The reset state of the first latch 31 allows:
the SOF detecting signal corresponding to the *Q̅* output of the first latch 31 to return high; and
the CRC-receiving indicating signal CRC-P corresponding to the Q output of the third latch 38 to return low.

The SOF detecting signal SOF-N is therefore kept low from the receipt of the SOF of the relay-target CAN frame RX-N to the end timing of the CRC sequence (see the waveform "SOF-N" in Fig. 3).

In addition, the CRC-receiving indicating signal CRC-P is therefore kept high during receipt of the CRC field of the relay-target CAN frame RX-N (see the waveform "SOF-N" in Fig. 3).

In the relay-function sequencer 13, the first and second flip-flops (D-type flip-flops) 40 and 41 serve as a shift register SF.

When the reset signal with the high level output from the CRC field counter 39 is input as its D input of the first flip-flop 40, the first flip-flop 40 is operative to latch the input reset signal in one communication clock cycle to thereby delay the reset signal by one communication clock cycle. The first flip-flop 40 is operative to output the delayed reset signal as a first timing signal TM1-P.

When the first timing signal TM1-P output from the first flip-flop 40 is input as its D input of the second flip-flop 41, the second flip-flop 41 is operative to latch the input first timing signal TM1-P in one clock cycle to thereby delay the first timing signal TM1-P by one communication clock cycle. The second flip-flop 41 is operative to output the delayed first timing signal TM1-P as a second timing signal TM2-P.

Specifically, when the CRC-receiving signal CRC-P is turned low in response to the reset of the third latch 38, the first timing signal TM1-P corresponding to the Q output of the first flip-flop 40 is turned high, and remains at the high level in one communication clock cycle (see the waveforms "CRC-P" and "TM1-P").

When the first timing signal TM1-P is returned low, the second timing signal TM2-P corresponding to the Q output of the second flip-flop 41 is turned high, and remains at the high level in one communication clock cycle (see the waveforms "TM1-P" and "TM2-P").

In other words, in response to the turning of the CRC-receiving signal CRC-P into the low level, the first and second timing signals TM1-P and TM2-P each with the high level are sequentially output from the shift register in this order in the form of pulses while they are shifted from each other by one communication clock cycle.

It is to be noted that the suffix "-N" assigned to the reference characters of the signals, such as RX-N, SOF-N, and the like, indicates that each of the signals is low active. It is also to be noted that the suffix "-S" assigned to the reference characters of the signals, such as TM1-P, TM2-P, and the like, indicates that each of the signals is high active.

The destination determining unit 14 is operative to retrieve information indicative of at least one of the networks corresponding to the ID of the relay-target CAN frame RX-N, and to determine at least one destination network of the relay-target CAN frame RX-N based on the retrieved information.

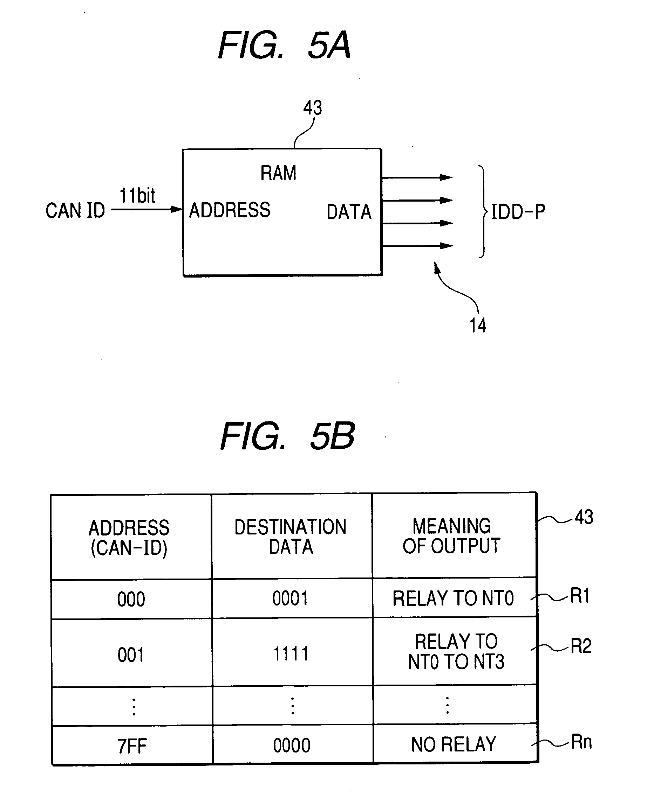

Specifically, the destination determining unit 14 has a RAM 43, as an example of rewritable memories, serving as an ID retrieving table (see Fig. 5A).

As illustrated in Fig. 5B, the RAM 43 includes a collection of records R1 to Rn.

Specifically, the records R1 to Rn respectively store 11-bit addresses of $000 to $7FF that are allocatable as IDs of CAN frames (CAN-IDs). It is to be noted that the prefix "$" assigned to the addresses $000 to $7FF indicates that the addresses are represented in hexadecimal.

Each of the records R1 to Rn also stores destination data associated with a corresponding address of each of the records R1 to Rn, and, as need arises, information indicative of the meaning of the corresponding destination data.

The destination data associated with each of the addresses represents that a CAN frame whose ID is equivalent to each of the addresses is relayed to which of the networks NT0 to NT3. In the first embodiment, the destination data has a bit sequence of zeroth to third bits, and the zeroth to third bits of the destination data respectively correspond to the networks NT0 to NT3.

For example, assuming that the zeroth bit (least significant bit) of the bit sequence corresponds to the network NT0, when "1" is set to the zeroth bit, this represents that a corresponding CAN frame should be relayed to the network NT0. Similarly, assuming that the next first bit of the bit sequence corresponds to the network NT1, when "1" is set to the first bit, this represents that a corresponding CAN frame should be relayed to the network NT1.

Specifically, assuming that the zeroth to third bits of the bit sequence respectively correspond to the networks NT0 to NT3, when "1" is set to each of the zeroth to third bits, this represents that a corresponding CAN frame should be relayed to all of the networks NT0 to NT3 (see Fig. 5B).

In contrast, in this assumption, when "0" is set to each of the zeroth to third bits, this represents that a corresponding CAN frame should not be relayed to all of the networks NT0 to NT3 (see Fig. 5B).

For this reason, as illustrated in Fig. 5A, input of the ID of 11 bits of a CAN frame in address lines of the RAM 43 allows the destination data indicative of at least one of the networks NT0 to NT3 to which the CAN frame should be relayed to be retrieved. The retrieved at least one of the networks NT0 to NT3 is output from the RAM 43 as a destination indicating signal IDD-P.

As described above, the destination determining unit 14 is operative to:
retrieve the respective bits of the relay-target CAN frame RX-N, output from the CAN receiving block 11, in synchronism with the communication clock pulses during a period in which the ID-receiving indicating signal IDF-N is kept low;
input the retrieved bits, such as 11 bits of the ID, of the relay-target CAN frame RX-N in the address lines of the RAM 43; and
output, to the relay-determining circuit 16, the destination data of the zeroth to third bits output from the RAM 43 as the destination indicating signal IDD-P; this destination data of the zeroth to third bits corresponds to the input 11 bits of the ID.

In the first embodiment, note that the destination determining unit 14 is configured to output, to the relay-determining circuit 16, the destination data output from the RAM 43 as the destination indicating signal IDD-P during a period. The period is defined as the interval between the timing when the DLC-receiving signal DLC-N is turned from the low level to the high level (the timing when the receipt of the DLC in the DLC field of the relay-target CAN frame RX-N is completed) and the timing when the SOF detecting signal is returned high.

The CRC determining circuit 15 is operative to determine whether a transfer error arises in the relay-target CAN frame RX-N.

As illustrated in Fig. 2, the CRC determining circuit 15 includes a first functional block (FB) 15a1. As is the case of sender node, the first functional block 15a1 works to execute the CRC sequence calculation on a bit train from the SOF to the data of the data field form when the SOF detecting signal SOF-N is turned low until the CRC-receiving indicating signal CRC-P is turned low.

The determining circuit 15 also includes a second functional block 15a2 operative to, when the CRC-receiving indicating signal CRC-P is turned high, start storing therein the bit train of the CRC sequence of the relay-target CAN frame RX-N output from the CAN receiving block 11, and to continue the store until the CRC-receiving indicating signal CRC-P is returned low.

The CRC determining circuit 15 further includes a third functional block 15a3 operative to compare the result of the CRC sequence calculation on the bit train from the SOF to the data of the data field with the CRC sequence stored in the CRC determining circuit 15.

The third functional block 15a3 also works to output a CRC check result signal CRCV-P of one bit to the relay determining circuit 16 simultaneously with when the first timing signal TM1-P output from the relay-function sequencer 13 is turned high (see the waveform "CRCV-P" in Fig. 3).

It is to be noted that the CRC check result signal CRCV-P has the high level when the result of the CRC sequence calculation on the bit train from the SOF to the data of the data field is identical to the CRC sequence stored in the CRC determining circuit 15. In other words, the CRC check result signal CRCV-P has the high level when there are no transfer errors in part of the bit train of the relay-target CAN frame RX-N within the range from the SOF to the CRC sequence field.

It is also to be noted that the CRC check result signal CRCV-P has the high level when the result of the CRC sequence calculation on the bit train from the SOF to the data of the data field is identical to the CRC sequence stored in the CRC determining circuit 15.

In other words, the CRC check result signal CRCV-P has the high level when there are no transfer errors in part of the bit train of the relay-target CAN frame RX-N within the range from the SOF to the CRC sequence field.

In contrast, the CRC check result signal CRCV-P has the low level when the result of the CRC sequence calculation on the bit train from the SOF to the data of the data field is different from the CRC sequence stored in the CRC determining circuit 15. In other words, the CRC check result signal CRCV-P has the low level when there is a transfer error in the part of the bit train of the relay-target CAN frame RX-N within the range from the SOF to the CRC sequence field.

The relay determining circuit 16 for example includes a latch 16a1 whose inputs are active high.

Specifically, the latch 16a1 is operative to store therein the destination indicating signal IDD-P of four bits (zeroth to third bits) output from the destination determining unit 14 and the CRC check result signal CRCV-P of one bit output from the CRC determining circuit 15.

In addition, the relay determining circuit 16 for example includes an AND circuit 16a2 operative to, when the second timing signal TM2-P is turned high, logically AND each of the zeroth to third bits of the destination indicating signal IDD-P with the CRC check result signal CRCV-P of one bit. This allows a signal of four bits representing the result of the logical AND operation to be obtained. The AND circuit 16a2 is also operative to output, to the destination switching circuit 17, the obtained signal of four bits as a frame relay request signal TXRQ-P.

The operations of the relay determining circuit 16 allow the destination indicating signal IDD-P to be supplied to the destination switching circuit 17 as the frame relay request signal TXRQ-P when the CRC check result signal CRCV-P is in the high level so that there are not transfer errors in the relay-target CAN frame RX-N.

In contrast, the operations of the relay determining circuit 16 allow all bits of the frame relay request signal TXRQ-P to remain low when the CRC check result signal CRCV-P is in the low level, which prevents the relay-target CAN frame RX-N from being transferred through the destination switching circuit 17.

Note that the frame relay request signal TXRQ-P with the high level output from the relay determining circuit 16 is configured to be latched by the destination switching circuit 17. The relay determining circuit 16 is for example configure to be reset at a time when the second timing signal TM2-P is returned from the high level to the low level.

The reset of the relay determining circuit 16 allows the latched values of the destination indicating signal IDD-P and the CRC check result signal CRCV-P stored in the latch 16a1 to be respectively initialized to the low levels.

Similarly, the reset of the relay determining circuit 16 allows the output value of the frame relay request signal TXRQ-P from the relay determining circuit 16 to be initialized to the low level.

The destination switching circuit 17 is operative to switchably supply, bit-by-bit, the relay-target CAN frame RX-N output from the CAN receiving block 11 to at least one of the CAN transmitting blocks TX0 to TX3.

Specifically, the destination switching circuit 17 includes a plurality of switches SW0 to SW3 (in Fig. 2 switch SW2 is omitted in illustration). The switches SW0 to SW3 allow the CAN transmitting blocks SW0 to SW3 to be individually connected and disconnected respectively to corresponding signal input lines of the receiving frame buffer 12.

When nth (n is any one of 0 to 3) bit from, for example, the least significant end of the bit train of the frame relay request signal TXRQ-P output from the circuit 16 is turned high, the destination switching circuit 17 works to latch the nth bit of the bit train of the frame relay request signal TXRQ-P.

Next, the relay determining circuit 16 works to turn a switch SWn on. This allows the switch SWn in on state to sequentially supply, to the CAN transmitting block TXn of the destination network NTn corresponding to the nth bit, the bit train of the relay-target CAN frame RX-N buffered bit-by-bit in the receiving frame buffer 12 from its start bit thereof toward its last bit.

The CAN transmitting block TXn is operative to receive the bit train of the relay-target CAN frame RX-N sequentially supplied in bit from the receiving frame buffer 12 through the switch SWn. In addition, the CAN transmitting block TXn is operative to send, to the destination network NTn, the received bit train of the relay-target CAN frame RX-N in a CAN frame (see the waveform "RX-N" in Fig. 3).

Note that the destination switching circuit 17 is for example configured to be reset after a predetermined period has passed since the SOF detecting signal SOF-N output from the sequencer 13 is turned high; this predetermined period probably allows relay of the relay-target CAN frame RX-N by the CAN transmitting block TXn toward the destination network NTn to be completed. The reset of the destination switching circuit 17 permits each of the switches SW0 to SW3 to be initialized to off state.

The microprocessor 18 is electrically connected, through a microcomputer bus (see Fig. 2), to at least the CAN receiving block 11, the destination determining unit 14, and each of the CAN transmitting blocks TX0 to TX3, and operative to , for example, execute:
a task of sending, to the CAN receiving block 11 and each of the CAN transmitting blocks TX0 to TX3, instructions including communication conditions, such as communication speed and the like; and
a task of rewriting information stored in the RAM 43 of the destination determining unit 14; this information deciding which of CAN frames with IDs are relayed to which of the networks.

Operations of the gateway 1 whose structure schematically has been described above will be described hereinafter.

When any one of the ECUs connected to one of the networks NT0 to NT4, such as the network NT4, sends a relay target CAN frame therethrough, the relay-target CAN frame is received by the CAN receiving block 11. Thereafter, the bit train of the relay-target CAN frame RX-N is sequentially sent bit-by-bit to the receiving frame buffer 12 so that the bit train of the relay-target CAN frame RX-N is sequentially stored bit-by-bit in the buffer 12.

Concurrently with the relay-target CAN frame RX-N receiving and storing operation, the destination determining unit 14 works to enter the ID contained in the received part of the relay-target CAN frame RX-N into the RAM 43 as an address. This allows at least one destination network of the relay-target CAN frame to be retrieved from the RAM 43.

Thereafter, the destination determining unit 14 outputs the destination indicating signal IDD-P in synchronization with the end timing of receipt of the DLC field of the relay-target CAN frame RX-N. The destination indicating signal IDD-P represents whether the relay-target CAN frame RX-N is relayed, and the destination network when it is determined that the relay-target CAN frame RX-N is relayed (see the waveform "IDD-P" in Fig. 3).

For example, when the ID contained in the relay-target CAN frame RX-N is set to $000, as the destination indicating signal IDD-P, a bit train "0001" is output; this bit train "0001" represents that the relay-target CAN frame RX-N should be relayed to the network NT0.

Concurrently with the relay-target CAN frame RX-N receiving and buffering operations and the destination determining operation of the determining unit 14, the CRC determining circuit 15 works to determine, as described above, whether a transfer error arises in the relay-target CAN frame RX-N based on each bit of the received part of the frame RX-N within the range from the SOF to the data field.

Then, the CRC determining circuit 15 works to output, to the relay determining circuit 16, the CRC check result signal CRCV-P in synchronization with the first communication clock pulse immediately after the end timing of receipt of the CRC sequence field of the relay-target CAN frame RX-N (see the waveform "CRCV-P" in Fig. 3).

When the CRC check result signal CRCV-P is in the high level, it is determined that no transfer errors arise in the relay-target CAN frame RX-N. The destination indicating signal IDD-P is therefore output, as the frame relay request signal TXRQ-P, from the relay determining circuit 16 to the destination switching circuit 17 in synchronization with the second communication clock pulse after the end timing of receipt of the CRC sequence field of the relay-target CAN frame RX-N (see the waveform "TXRQ-P" in Fig. 3).

As a result, the bit train of the relay-target CAN frame RX-N buffered in the buffer 12 is sequentially supplied bit-by-bit by the destination switching circuit 17 from its start bit toward its last bit to at least one of the CAN transmitting blocks TX0 to TXn corresponding to at least one of the networks NT0 to NT3. The at least one of the networks NT0 to NT3 corresponds to at least one of the four bits of the frame relay request signal TXRQ-P; this at least one of the four bits has the high level.

Specifically, when at least one destination network for the relay-target CAN frame RX-N is determined, and it is determined that no transfer errors arise in the relay-target CAN frame RX-N, the relay-target CAN frame RX-N buffered in the buffer 12 is sequentially supplied bit-by-bit to at least one CAN transmitting block corresponding to the at least one destination network.

Thereafter, the relay-target CAN frame RX-N is transferred from the at least one CAN transmitting block to the at least one destination network.

Note that, if each of the CAN transmitting blocks TX0 to TX3 has a function of recalculating the CRC sequence at the timing of transmitting the relay-target CAN frame RX-N, the receiving frame buffer 12 can be configured to store part of the relay-target CAN frame RX-N within the range from the SOF to the data field.

Otherwise if no CAN transmitting blocks TX0 to TX3 have a function of recalculating the CRC sequence at the timing of transmitting the relay-target CAN frame RX-N, the receiving frame buffer 12 can be configured to store all bits of the relay-target CAN frame RX-N.

As described above, in the gateway 1 according to the first embodiment, CAN-frame transfer delay times through the gateway 1 can be reduced as compared with conventional gateways. This is because:
the destination determining unit 14 can determine a destination network for a relay-target CAN frame before receipt of the CRC sequence field of the relay-target CAN frame; and
the destination switching circuit 17 and at least one of the CAN transmitting blocks TX0 to TX3 can start to relay the relay-target CAN frame when it is determined by the CRC determining circuit 15 that no transfer errors arise in the relay-target CAN frame after receipt of the CRC sequence field.

Specifically, as illustrated in Fig. 3, it is possible to start to transfer the relay-target CAN frame RX-N to the determined at least one destination network in synchronization with the second communication clock pulse after the end timing of receipt of the CRC sequence field of the relay-target CAN frame RX-N.

Moreover, in the gateway 1 according to the first embodiment, when the CRC check result signal CRCV-P is turned low because it is determined that a transfer error arises in the relay-target CAN frame RX-N, it is possible to prevent the relay-target CAN frame from being relayed to the determined at least one destination network. This can avoid unnecessary increase of traffic on the networks NT0 to NT4.

### Second embodiment

An in-vehicle network gateway 51 according to a second embodiment of the present invention will be described hereinafter. Like the first embodiment, the in-vehicle network gateway 51 is applied to the in-vehicle communication system IS illustrated in Fig. 1.

Like reference characters are assigned to like parts in the in-vehicle network gateways according to the first and second embodiments. Descriptions of the parts of the in-vehicle network gateway according to the second embodiment will be therefore omitted, and different parts of the in-vehicle network gateway according to the second embodiment from those according to the first embodiment will be described in detail hereinafter.

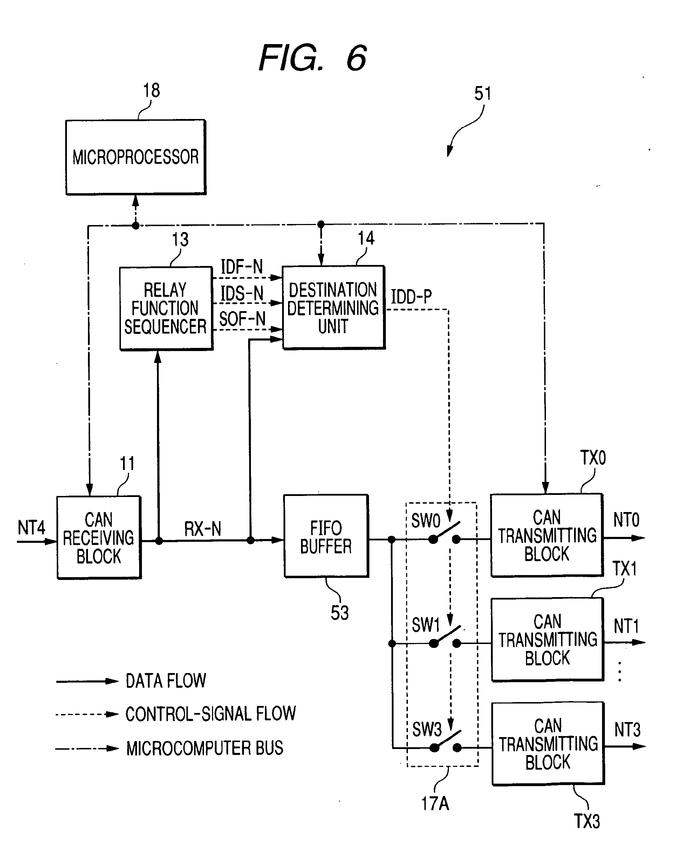

As illustrated in Fig. 6, the gateway 51 according to the second embodiment has the following different points from the gateway 1.

As the first different point, the gateway 51 includes a FIFO (First-In-First-Out) buffer 53 in place of the receiving frame buffer 12. The FIFO buffer 53 is connected to the CAN receiving block 11 and to a destination switching circuit 17A. Like the buffer 12, the FIFO buffer 53 is operative to sequentially store, bit-by-bit, a relay-target CAN frame RX-N output from the CAN receiving block 11, and is operative to output each stored bit in the order in which the bits are stored.

Specifically, the FIFO buffer 53 is operative to buffer a predetermined number of bits of the relay-target CAN frame corresponding to a predetermined buffer capacity without outputting it. The FIFO buffer 53 is also operative to, after the predetermined number of bits of the relay-target CAN frame have been stored, sequentially output the stored number of bits in the FIFO buffer 53.

In other words, the FIFO buffer 53 is also operative to delay the predetermined number of bits of the relay-target CAN frame by a predetermined period equivalent to the predetermined buffer capacity, and thereafter, to sequentially output the predetermined number of bits stored therein.

In the second embodiment, the predetermined capacity of the FIFO buffer 53 allows a predetermined number of bits of the bit train of the relay-target CAN frame RX-N within the range from the SOF to the DLC field.

As the second different point, as compared with the gateway 1, the gateway 51 is designed without the need of the CRC determining circuit 15 and relay determining circuit 16. Specifically, the gateway 51 is configured such that a destination determining unit 14 is directly connected to the destination switching circuit 17A, which allows the destination indicating signal IDD-P output from the destination determining unit 14 to be directly input to the destination switching circuit 17A.

When nth (n is any one of 0 to 3) bit from, for example, the least significant end of the bit train of the destination indicating signal IDD-P is turned high, the destination switching circuit 17A works to latch the nth bit of the bit train of the destination indicating signal IDD-P, and to turn a switch SWn on.

This allows the switch SWn in on state to sequentially supply, to the CAN transmitting block TXn of the destination network NTn corresponding to the nth bit, the bit train of the relay-target CAN frame RX-N stored in the FIFO buffer 53.

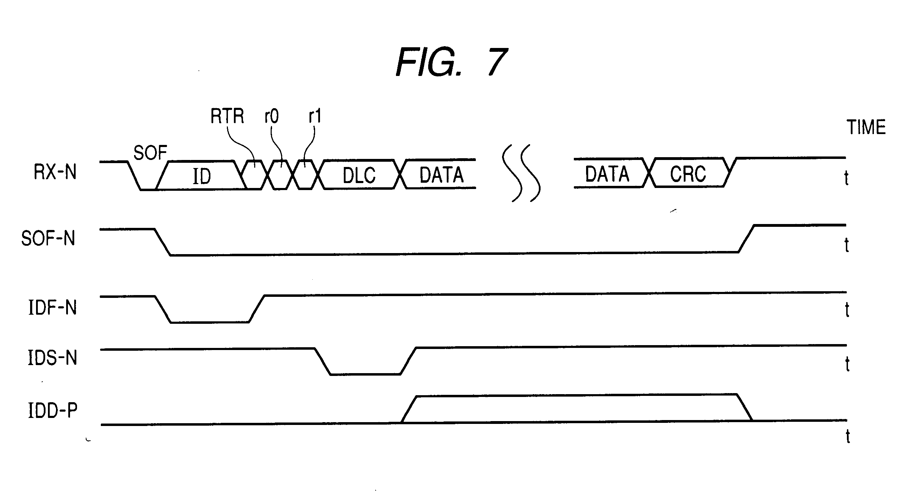

As the third different point, because no CRC determining circuit 15 and relay determining circuit 16 are provided in the gateway 51 set forth above, the relay-function sequencer 13 is configured not to output the CRC receiving indicating signal CRC-P, and the first and second timing signals TM1-P and TM2-P. This is clearly seen by comparison between Fig. 3 and Fig. 7.

Note that the relay-function sequencer 13 can be configured to output the signals CRC-P, TM1-P and TM2-P, but the output signals are not used in the gateway 51.

Operations of the gateway 51 will be described hereinafter.

As in the case of the first embodiment, when any one of the ECUs connected to one of the networks NT0 to NT4, such as the network NT4, sends a relay target CAN frame therethrough, the relay-target CAN frame is received by the CAN receiving block 11. Thereafter, the bit train of the relay-target CAN frame RX-N is sequentially sent bit-by-bit to the FIFO buffer 53 so that the bit train of the relay-target CAN frame RX-N is sequentially stored bit-by-bit in the buffer 53.

Concurrently with the relay-target CAN frame RX-N receiving and buffering operation, the destination determining unit 14 works to enter the ID contained in the received part of the relay-target CAN frame RX-N into the RAM 43 as an address. This allows at least one destination network of the relay-target CAN frame to be retrieved from the RAM 43.

Thereafter, the destination determining unit 14 outputs the destination indicating signal IDD-P in synchronization with the end timing of receipt of the DLC field of the relay-target CAN frame RX-N.

When the destination indicating signal IDD-P is output from the destination determining unit 14 in synchronization with the end timing of receipt of the DLC field of the relay-target CAN frame RX-N, the bit train of the relay-target CAN frame RX-N stored in the FIFO buffer 53 is sequentially supplied bit-by-bit by the destination switching circuit 17A to at least one of the CAN transmitting blocks TX0 to TXn corresponding to at least one of the networks NT0 to NT3. The at least one of the networks NT0 to NT3 corresponds to at least one of the four bits of the destination indicating signal IDD-P; this at least one of the four bits has the high level.

Specifically, the gateway 51 is configured to, when at least one destination network for the relay-target CAN frame RX-N is determined by the destination determining unit 14, sequentially supply, bit-by-bit, the relay-target CAN frame RX-N stored in the FIFO buffer 53 to at least one CAN transmitting block corresponding to the at least one destination network.

The received bits of the relay-target CAN frame can be sequentially relayed before all bits of the relay-target CAN frame are completely received by the CAN receiving block 11, making it possible to further reduce CAN-frame transfer delay times through the gateway 51 as compared with the gateway 1 according to the first embodiment.

In addition, in the gateway 51 according to the second embodiment, the destination determining unit 14 is configured to output the destination indicating signal IDD-P in synchronization with the end timing of receipt of the DLC field of the relay-target CAN frame RX-N.

The destination determining unit 14 can be however configured to output the destination indicating signal IDD-P in synchronization with a given timing earlier than the end timing of receipt of the DLC field of the relay-target CAN frame RX-N. This allows the capacity of the FIFO buffer 53 to be reduced.

For example, the destination determining unit 14 can be configured to output the destination indicating signal IDD-P in synchronization with a given timing as early as possible from the end timing of receipt of the ID field of the relay-target CAN frame RX-N. Note that the end timing of receipt of the ID field of the relay-target CAN frame RX-N corresponds to a timing when the ID receiving indicating signal IDF-N is turned from the low level to the high level.

That is, the earlier the output timing of the destination indicating signal IDD-P from the end timing of receipt of the ID field of the relay-target CAN frame RX-N, the more the capacity of the FIFO buffer 53 is reduced, making it possible to further reduce CAN-frame transfer delay times through the gateway 51.

Particularly, the destination determining unit 14 is configured such that only input of the ID contained in the relay-target frame RX-N to the RAM 43 as an address permits the destination indicating signal IDD-P to be output therefrom.

For this reason, it is possible for the destination determining unit 14 to start to output the destination indicating signal IDD-P during an interval from the end timing of receipt of the ID field of the relay-target CAN frame RX-N to the communication clock pulse immediately after the end timing. This allows CAN-frame transfer delay times through the gateway 51 to be still further reduced.

It is to be noted that each of the CAN transmitting blocks TX0 to TX3 can have a first structure for starting to sequentially send, bit-by-bit, a relay-target frame supplied from the FIFO buffer 53 to the corresponding destination network immediately after receiving a bit of the relay-target frame.

It is also to be noted that each of the CAN transmitting blocks TX0 to TX3 can have a second structure for, after one CAN transmitting blocks TX0 to TX3 can also has been stored therein, starting to sequentially send the stored frame bit-by-bit to the corresponding destination network.

Even if the first structure or the second structure is adopted for each of the CAN transmitting blocks TX0 to TX3, the gateway 51 can supply the relay-target frame to each of the CAN transmitting blocks TX0 to TX3 earlier than the gateway 1.

### Third embodiment

An in-vehicle network gateway 55 according to a third embodiment of the present invention will be described hereinafter. Like the first embodiment, the in-vehicle network gateway 55 is applied to the in-vehicle communication system IS illustrated in Fig. 1.

Like reference characters are assigned to like parts in the in-vehicle network gateways according to the first, second, and third embodiments. Descriptions of the parts of the in-vehicle network gateway according to the third embodiment will be therefore omitted, and different parts of the in-vehicle network gateway according to the third embodiment from those according to the first and second embodiments will be described in detail hereinafter.

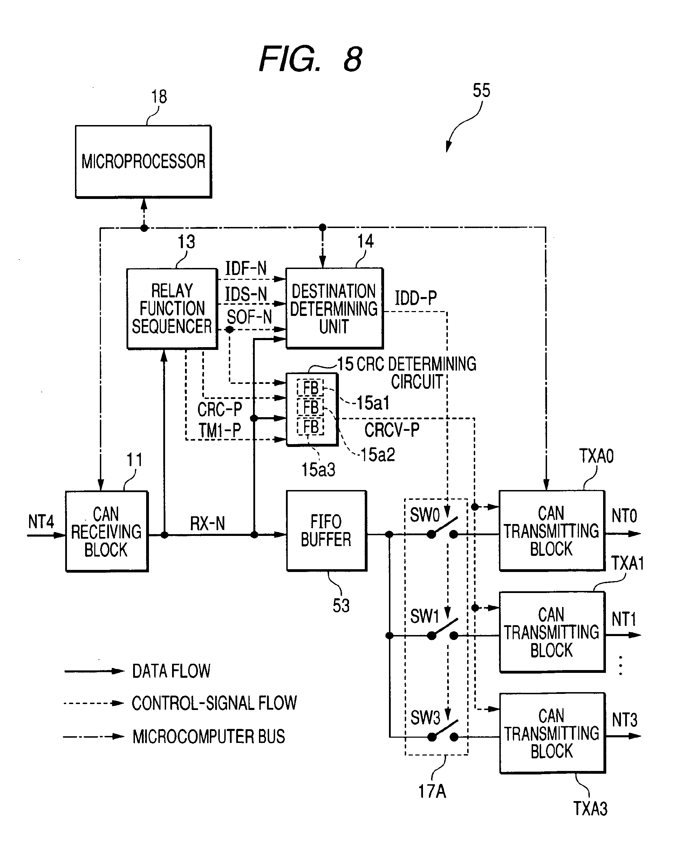

As illustrated in Fig. 8, the gateway 55 according to the third embodiment has the following different points from the gateway 1.

As the first different point, the gateway 55 includes the FIFO buffer 53 in place of the receiving frame buffer 12 like the second embodiment.

As the second different point, as compared with the gateway 1, the gateway 55 is designed without the need of the relay determining circuit 16. Specifically, the gateway 55 is configured such that the destination determining unit 14 is directly connected to the destination switching circuit 17A, which is similar to the second embodiment. This allows the destination indicating signal IDD-P output from the destination determining unit 14 to be directly input to the destination switching circuit 17A.

When nth (n is any one of 0 to 3) bit from, for example, the least significant end of the bit train of the destination indicating signal IDD-P is turned high, the destination switching circuit 17A works to turn a switch SWn on. This allows the switch SWn in on state to sequentially supply, to a CAN transmitting block TXAn of the destination network NTn corresponding to the nth bit, respective bits of the bit train of the relay-target CAN frame RX-N stored in the FIFO buffer 53.

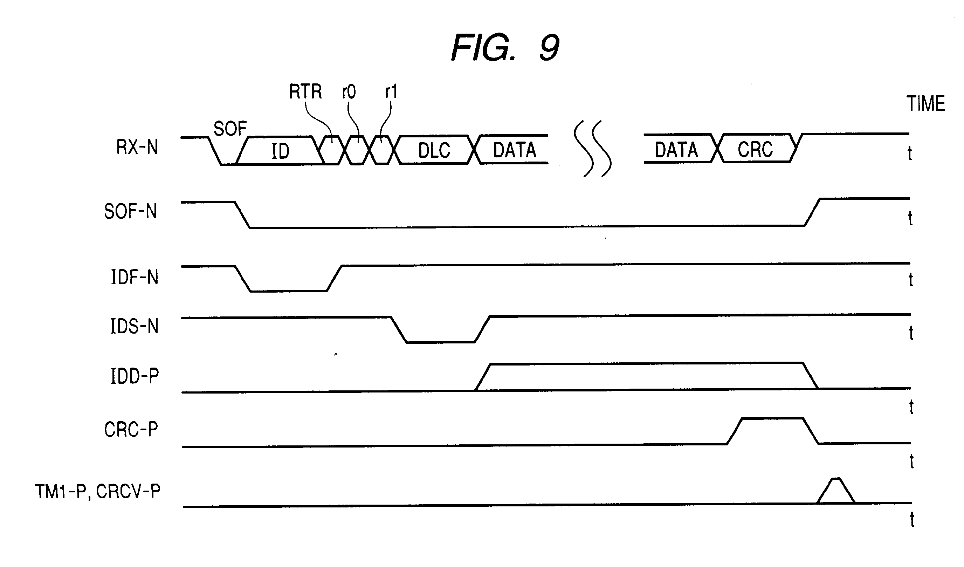

As the third different point, because no relay determining circuit 16 is provided in the gateway 55 set forth above, the relay-function sequencer 13 is configured not to output the second timing signal TM2-P. This is clearly seen by comparison between Fig. 3 and Fig. 9. Note that the relay-function sequencer 13 can be configured to output the signal TM2-P, but the output signal is not used in the gateway 55.

As the fourth different point, the CRC check result signal CRCV-P is supplied to each of the CAN transmitting blocks TXA0 to TXA3. Each of the CAN transmitting blocks TXA0 to TXA3 is operative to shut down the frame transferring process toward the corresponding destination network if the CRC check result signal CRCV-P is in the low level at the timing when the first timing signal TM1-P is turned high.

In other words, each of the CAN transmitting blocks TXA0 to TXA3 is operative to shut down the frame transferring process toward the corresponding destination network if transfer errors arise in the relay-target CAN frame RX-N at the timing when the first timing signal TM1-P is turned high.

Specifically, in the third embodiment, the CRC check result signal CRCV-P with the low level output from the CRC determining circuit 15 toward each of the CAN transmitting blocks TXA0 to TXA3 can prevent each of the blocks TXA0 to TXA3 from transferring respective bits of the relay-target frame supplied from the FIFO buffer 53.

The gateway 55 according to the third embodiment is configured to start to supply the relay-target frame bit-by-bit from the FIFO buffer 53 to each of the blocks TXA0 to TXA3. After the start of data supply from the FIFO buffer 53 to each of the blocks TXA0 to TXA3, if the CRC determining circuit 15 determines that a transfer error arises in the relay-target frame, it is possible to cancel the data transferring operation of each of the blocks TXA0 to TXA3 toward the corresponding destination network.

As described above, in the third embodiment, as in the case of the second embodiment, the gateway 55 is configured to, when at least one destination network for the relay-target CAN frame RX-N is determined by the destination determining unit 14, sequentially supply, bit-by-bit, the relay-target CAN frame RX-N stored in the FIFO buffer 53 to at least one CAN transmitting block corresponding to the at least one destination network.

The received bits of the relay-target CAN frame can be sequentially relayed before all bits of the relay-target CAN frame are completely received by the CAN receiving block 11, making it possible to further reduce CAN-frame transfer delay times through the gateway 55 as compared with the gateway 1 according to the first embodiment.

In addition, in the gateway 55 according to the third embodiment, when the CRC check result signal CRCV-P is turned low because it is determined that a transfer error arises in the relay-target CAN frame RX-N, it is possible to prevent the relay-target CAN frame from being relayed to the determined at least one destination network. This can avoid unnecessary increase of traffic on the networks NT0 to NT4.

As described in the second embodiment, it is assumed that each of the CAN transmitting blocks TXA0 to TXA3 has the first structure.

In this assumption, when a transfer error arises in the relay-target CAN frame RX-N, some bits of the error-arisen frame RX-N may be relayed to the corresponding destination network. The first structure of each of the blocks TXA0 to TXA3 however can prevent all bits of the error-arisen frame RX-N from transferring to the corresponding destination network, making it possible to avoid unnecessary increase of traffic on the networks NT0 to NT4.

In this assumption, when no transfer errors arise in the relay-target CAN frame RX-N, it is possible to bring the frame transfer start timing of each of the blocks TXA0 to TXA3 to the corresponding destination network earlier than that of each of the blocks TX0 to TX3 according to the first embodiment. This allows CAN-frame transfer delay times through the gateway 55 to be further reduced.

On the other hand, it is assumed that each of the CAN transmitting blocks TXA0 to TXA3 has the second structure.

In this assumption, each of the CAN transmitting blocks TXA0 to TXA3 can transfer the relay-target frame bit-by-bit after the timing when the CRC check result signal CRCV-P is output from the CRC determining circuit 15. Like the first embodiment, the second structure of each of the CAN transmitting blocks TXA0 to TXA3 can prevent a relay-target frame in which a transfer error arises from being transferred to the corresponding destination network.

In each of the first to third embodiments, the ID of a CAN frame consists of 11 bits (standard format), but the present invention is not limited to the structure. Specifically, the ID of a CAN frame can consist of 29 bits (extended format). In this case of the increased number of bits of the ID, as illustrated in Fig. 10A, a destination determining unit 14A preferably can be provided with a CAM (Content Addressable Memory) 61 and a RAM 63. CAMs are normally configured to respond to the input of a particular data pattern to thereby give back the location of that data.

As illustrated in Fig. 10B, 29-bit IDs that are allocatable to CAN frames are stored beforehand in corresponding addresses each with 4 bits of the CAM 61, respectively. Specifically, the CAM 61 is configured to, when one of the IDs is input thereto, output an address corresponding to the input one of the IDs.

As shown in Fig. 10C, the RAM 63 includes a collection of records RA.

Specifically, each of the records RA of the RAM 63 stores the same address of 4 bits as an address of the CAM 61 with which the corresponding ID is associated therein. Each of the records RA also stores destination data of 4 bits associated with a corresponding address of each of the records RA, and, as need arises, information indicative of the meaning of the corresponding destination data.

The destination data associated with each of the addresses of the RAM 63 equivalent to a corresponding address of the CAM 61 represents that a CAN frame whose ID is equivalent to each of the addresses is relayed to which of the networks NT0 to NT3.

Moreover, output lines of the CAM 61 are connected respectively to address lines of the RAM 63 so that the address output from the CAM 61 is entered to the RAM 63 through the address lines as "entry address".

Specifically, input of one of the IDs of a relay-target CAN frame to the CAM 61 permits the address of 4 bits associated with the input one of the IDs to be output as an entry address to the address lines of the RAM 63. Input of the entry address to the RAM 63 allows destination data of 4 bits associated with an address equivalent to the entry address to output therefrom.

As described above, the destination determining unit 14A according to the modification is configured to:
enter an ID of 29 bits into the CAM 61; and
output destination data corresponding to the entered ID and output from the RAM 63 as the destination indicating signal IDD-P.

The configuration of the destination determining unit 14A allows effectively decrease of the storage capacity of a storage device (memory) installed therein and required to determine destination networks based on input IDs. This is because as follows:

In the RAM 43 according to the first embodiment, all of the 11-bit addresses of $000 to $7FF that can be given as IDs of CAN frames are dedicated to store pieces of destination data even though some of the IDs may be unused.

In contrast, in the RAM 63 according to the third embodiment, addresses equivalent to addresses of the CAM 61 in which the IDs to be used for CAN frames are actually stored in advance are dedicated. This allows some addressees in the RAM 63 corresponding to some unused 29-bit IDs to be free, making it possible to reduce the storage capacity of the RAM 63 required to determine destination networks based on input IDs.

In each of the first to third embodiments, an ID located in a CAN frame identifies a type and/or a description of a corresponding message, but the present invention is not limited to the structure. Specifically, an ID located in a CAN frame can identify a destination node (a destination ECU and/or a destination network) of the corresponding CAN frame. In this case, the destination determining unit 14 can easily determine at least one destination network based on the ID contained in a relay-target CAN frame without using the RAM 43.

In addition, in each of the first to third embodiments, the in-vehicle communication system adopts CAN protocol as a communication protocol used to transfer data through in-vehicle networks, but the present invention is not limited to the adoption.

Specifically, the in-vehicle communication system can adopt some communication protocols used to transfer data through in-vehicle networks. A communication frame defined by some of the communication protocols adoptable by the in-vehicle communication system is designed such that:
an ID field of the communication frame is located before a data field of the communication frame;
the ID field consists of an ID that allows at least one destination of the communication frame to be identifiable; and
the data filed consists of a message to be transferred by the communication frame.

Similarly, the network gateway according to each of the first to third embodiments is applied to an in-vehicle network system, but the present invention is not limited to the application.

Specifically, the network gateway according to each of the first to third embodiments can be applied to a communication system that adopts one of some of the communication protocols having the design described above.

While there has been described what is at present considered to be the embodiments and modifications of the present invention, it will be understood that various modifications which are not described yet may be made therein, and it is intended to cover in the appended claims all such modifications as fall within the true spirit and scope of the invention.

## Claims

1. A network gateway through which a plurality of networks each including a node are communicable to each other, at least one node and another one node allowing transfer of a target communication frame therebetween through the network gateway, the target communication frame being composed of a train of bits and defined by a predetermined communication protocol, the target communication frame containing an identifier and message data, the identifier being composed of part of the train of bits, the message data being composed of another part of the train of bits, the identifier being located before the message data based on the communication protocol, the identifier allowing a destination of the target communication frame to be identified, the network gateway comprising:
a receiving unit configured to, when the target communication frame is transferred bit-by-bit from at least one of the nodes through a corresponding one of the networks, sequentially receive the transferred target communication frame bit-by-bit, and to sequentially output the received target communication frame bit-by-bit;
a buffer configured to sequentially store therein the bits of the target communication frame sequentially output from the receiving unit;
a destination determining unit working, concurrently with the buffer, to receive, bit-by-bit, the target communication frame output from the receiving unit and to, when receiving the identifier of the target communication frame, determine a destination network of the target communication frame based on the received identifier; and
a transferring unit operatively connected to the buffer and configured to transfer, bit-by-bit, the target communication frame stored in the buffer to the destination network determined by the destination determining unit.

2. A network gateway according to claim 1, wherein the transferring unit is configured to start of transferring, bit-by-bit, the target communication frame stored in the buffer to the destination network in response to receipt of the end bit of the identifier of the target communication frame.

3. A network gateway according to claim 1, wherein an error-checking field is located after the message data in the target communication frame, the error-checking field being composed of a plurality of bits for transfer-error checking, further comprising:
a transfer error checking unit working, concurrently with the buffer and the destination determining unit, to determine whether a transfer error arises in the target communication frame output from the receiving unit based on each bit from the start bit of the target communication frame to the end bit of the error checking field thereof,
the transferring unit being configured to, when it is determined that no transfer errors arise in the target communication frame, transfer, bit-by-bit, the target communication frame stored in the buffer to the destination network determined by the destination determining unit.

4. A network gateway according to claim 3, wherein the transferring unit is configured to start of transferring, bit-by-bit, the target communication frame stored in the buffer to the destination network in response to receipt of the end bit of the error-checking field of the target communication frame.

5. A network gateway according to claim 4, wherein, when it is determined that a transfer errors arises in the target communication frame, the transferring unit being configured to prevent the target communication frame stored in the buffer being transferred to the destination network.

6. A network gateway according to claim 1, wherein an error-checking field is located after the message data in the target communication frame, the error-checking field being composed of a plurality of bits for transfer-error checking, further comprising:
a transfer error checking unit operatively connected to the transferring unit and working, concurrently with the buffer and the destination determining unit, to:
determine whether a transfer error arises in the target communication frame output from the receiving unit based on each bit from the start bit of the target communication frame to the end bit of the error checking field thereof; and
prevent the transferring unit from transferring, bit-by-bit, the target communication frame stored in the buffer to the destination network determined by the destination determining unit when it is determined that a transfer error arises in the target communication frame.

7. A network gateway according to claim 1, wherein the destination determining unit comprises a memory unit configured to:
store therein addresses allocatable to identifiers of a plurality of communication frames including the target communication frame, and data associated with each of the addresses, the data associated with each of the addresses representing that one of the plurality of communication frames whose identifier is equivalent to each of the addresses is relayed to which of the plurality of networks; and
upon input of the identifier of the target communication frame, output the data corresponding to one of the addresses, the one of the addresses corresponding to the input identifier.

8. A network gateway according to claim 1, wherein the destination determining unit comprises:
a first memory unit configured to store therein first addresses and identifiers respectively associated therewith, the identifiers being allocatable to a plurality of communication frames including the target communication frame; and
a second memory unit, whose input is connected to an output of the first memory unit, configured to store therein second addresses that are the same as the first addresses and data associated with each of the second addresses, the data associated with each of the second addresses representing that one of the plurality of communication frames whose identifier is equivalent to each of the second addresses is relayed to which of the plurality of networks,
the first memory unit being configured to, when the identifier of the target communication frame is input thereto, output a first address corresponding to the input identifier,
the second memory unit being configured to receive the output first address and to output the data associated with a second address equivalent to the received first address.

9. A method of relaying a communication frame through a plurality of networks each including a node, the communication frame being composed of a train of bits and defined by a predetermined communication protocol, the communication frame containing an identifier and message data, the identifier being composed of part of the train of bits, the message data being composed of another part of the bit train, the identifier being located before the message data based on the communication protocol, the identifier allowing a destination of the target communication frame to be identified, the method comprising:
when the target communication frame is transferred bit-by-bit from at least one of the nodes through a corresponding one of the networks, sequentially receiving the transferred communication frame bit-by-bit;
sequentially outputting the target communication frame bit-by-bit;
sequentially storing, in a storage, the bits of the communication frame sequentially outputted from the receiving unit;
receiving, concurrently with the storing of the bits of the communication frame in the storage, the target communication frame bit-by-bit outputted from the receiving;
when the receiving receives the identifier of the target communication frame, determining a destination network of the communication frame based on the received identifier; and
transferring, bit-by-bit, the target communication frame stored in the storage to the destination network determined by the determining.
